# EUROPEAN PATENT SPECIFICATION

(11) **EP 2 066 151 B1**
(45) Date of publication and mention of the grant of the patent: **24.10.2012**
(21) Application number: 08165677.9
(22) Date of filing: 02.10.2008
(51) Int. Cl.: H05B 37/02

(54) **Lighting driving device and lighting system thereof**
Beleuchtungsansteuerungsvorrichtung und Beleuchtungssystem damit
Dispositif de commande d'éclairage et système d'éclairage correspondant

(30) Priority: 14.11.2007 TW 96143094
(43) Date of publication of application: 03.06.2009
(73) Proprietor: ARC Solid-State Lighting Corporation, Jhonghe City, Taipei County 235 (TW)
(72) Inventor: Chang, Shih-Tung, Jhonghe City (TW); Chou, Chi-Hsien, Jhonghe City (TW)
(74) Representative: Viering, Jentschura & Partner

(56) References cited:
- EP-A2- 1 176 484
- DE-A1-102004 043 197
- US-A1- 2008 122 588
- US-B1- 6 738 855

## Description

### BACKGROUND OF THE INVENTION

### Field of the Invention

The present invention relates to a driving device, and more particularly to an address-free lighting driving device and a lighting system thereof.

### Related Art

The DMX512 communication protocol is developed by United States Institute fo r Theatre Technology (USITT) and used for controlling a light modulator by using a standard digital interface for stage controlling. Because of the characteristics of simplicity, reliability, and flexibility, the DMX512 has quickly become the mostly selected protocol under a situation of sufficient budget expense.

In the past, the DMX512 is mostly applied to stage lighting control, in which it is necessary to set ID addresses for lighting devices in advance, and then the lighting change is modulated according to the ID addresses, so as to show a content transmitted by the DMX512 controller.

Conventionally, the ID addresses are set and adjusted by a dip switch, or the ID address of each DMX control element is electronically set by means of communication transmission.

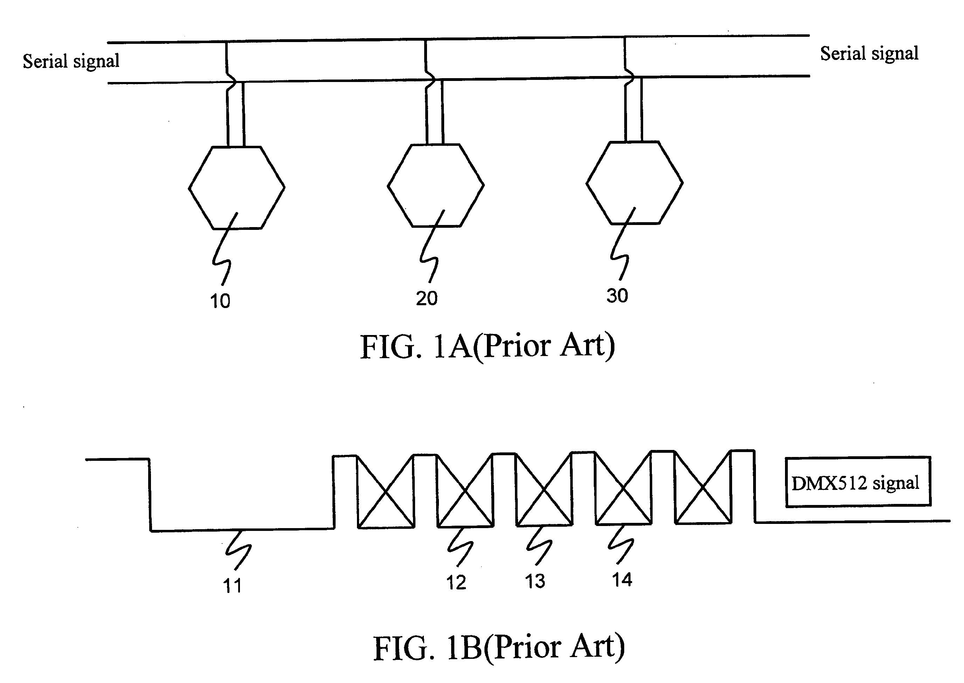

FIG. 1A is a schematic view of connections of a lighting device in the prior art. Referring to FIG. 1A, a first lighting device 10, a second lighting device 20, and a third lighting device 30 are connected in parallel. FIG 1B is a schematic view of a DMX512 signal. Referring to FIG. 1B, the DMX512 signal received by each lighting device is the same, in which the DMX512 signal includes an initial signal 11, a first lighting device controlling data 12, a second lighting device controlling data 13, and a third lighting device controlling data 14. According to the ID address setting mechanism, each lighting device obtains the corresponding lighting device controlling data respectively, such that an ON or OFF state of the lighting device is controlled.

However, according to the design demand, the lighting device may be installed at various positions (for example, under water, above water, on a wall surface, or hanging at a high position). If the dip-switch adjustment setting manner is adopted, the setting process may be quite inconvenient. Even if the setting position of the lighting device enables the ID address to be set easily, it is possible to result in false actions of the lighting device due to an error in the setting of the ID address.

Therefore, it has become a problem to be urgently solved by researchers how to provide an address-free lighting driving device.

### SUMMARY OF THE INVENTION

In view of the above problems, the present invention is directed to a lighting driving device and a lighting system thereof. Each lighting device is serially connected, and each lighting device is made to obtain respective lighting device controlling data in sequence, so that an actuation (for example, ON or OFF) of each lighting device is controlled, and thus the lighting device is driven without addressing, thereby improving the using convenience of the lighting system.

Therefore, a lighting driving device is provided in the present invention, which is used to drive a lighting device. The lighting driving device includes a first signal converter, a signal processor, and a lighting driving unit. The first signal converter carries a serial signal, and converts the serial signal to a digital signal, in which the first signal converter may be, for example, an RS-485 to transistor-transistor-logic (TTL) signal converter. The signal processor receives the digital signal output by the signal converter, decodes the digital signal to obtain a controlling data, and determines whether to transmit the serial signal to another lighting driving device or not according to the digital signal, in which the signal processor is a DMX512 signal decoder. The lighting driving unit outputs a driving signal to the lighting device according to the controlling data, so as to control an actuation (for example, ON or OFF) of the lighting device.

Furthermore, a lighting system is provided in the present invention, which includes a signal generator, for generating a serial signal including a plurality of lighting device controlling data; and a plurality of serially-connected lighting devices. Each lighting device includes a lighting driving device, and the lighting driving device controls an actuation of the lighting device where the lighting driving device is adopted according to the lighting device controlling data obtained by decoding.

In the lighting driving device and the lighting system thereof, various lighting devices are serially connected together and a lighting driving device is disposed on each lighting device, such that each lighting device obtains their respective lighting device controlling data according to a serial connection sequence, and thus the ON or OFF state of each lighting device is controlled without setting the ID addresses in advance. Therefore, the lighting devices are driven without addressing, and the using convenience of the lighting system is further enhanced.

DE 10 2004 043 197 A1 shows a lighting apparatus according to the preamble of claim 1.

### BRIEF DESCRIPTION OF THE DRAWINGS

The present invention will become more fully understood from the detailed description given herein below for illustration only, and thus is not limitative of the present invention, and wherein:
FIG. 1A is a schematic view of connections of a lighting device in the prior art;
FIG. 1B is a schematic view of a DMX512 signal;
FIG. 2 is a system block diagram of a lighting driving device according to the present invention;
FIG. 3 is a circuit block diagram of the lighting driving device according to the present invention;
FIG. 4 is a schematic view of a connection circuit of a lighting device according to the present invention;
FIG. 5A is a schematic view of a DMX512 signal of the lighting device according to the present invention;
FIG. 5B is a schematic view of the DMX512 signal of the lighting device according to the present invention;
FIG. 5C is a schematic view of the DMX512 signal of the lighting device according to the present invention; and
FIG. 6 is a block diagram of a lighting system according to the present invention.

### DETAILED DESCRIPTION OF THE INVENTION

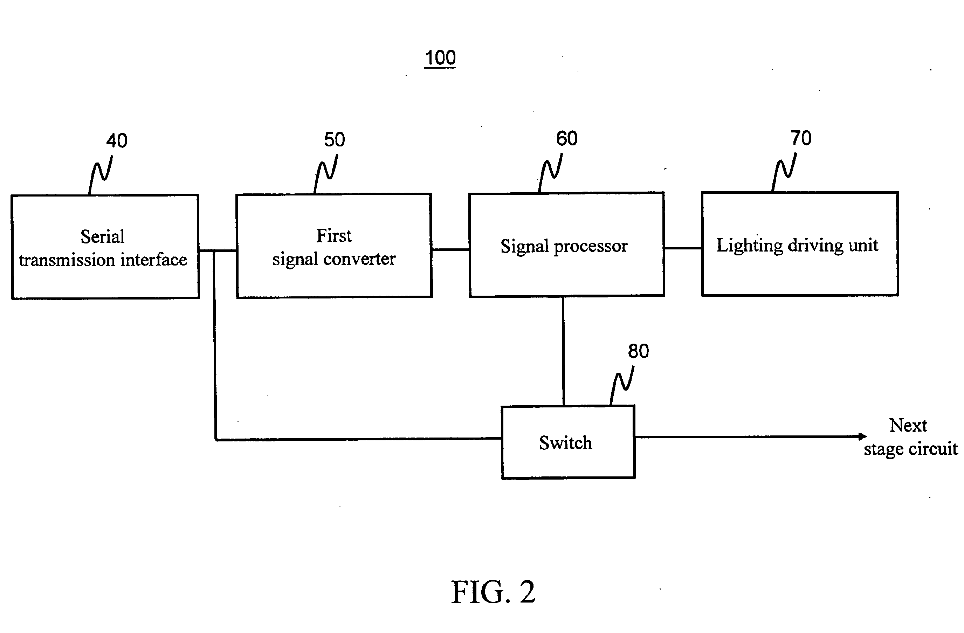

FIG. 2 is a system block diagram of a lighting driving device according to the present invention. As shown in FIG. 2, the lighting driving device of the present invention includes a serial transmission interface 40, a first signal converter 50, a signal processor 60, and a lighting driving unit 70.

The serial transmission interface 40 is used to receive a signal or data in a serial transmission format, for example, a differential signal. The serial transmission interface 40 may be, for example, an RS-422 interface or an RS-485 interface.

The first signal converter 50 is electrically connected to the serial transmission interface 40, for receiving a serial signal output by the serial transmission interface 40, and converting the serial signal to a digital signal. The digital signal is preferably a standard DMX512 signal. The first signal converter 50 is preferably an RS-485 to TTL signal converter. In addition, the serial transmission interface 40 of the present invention may be omitted, and instead, the serial signal is directly carried by the first signal converter 50.

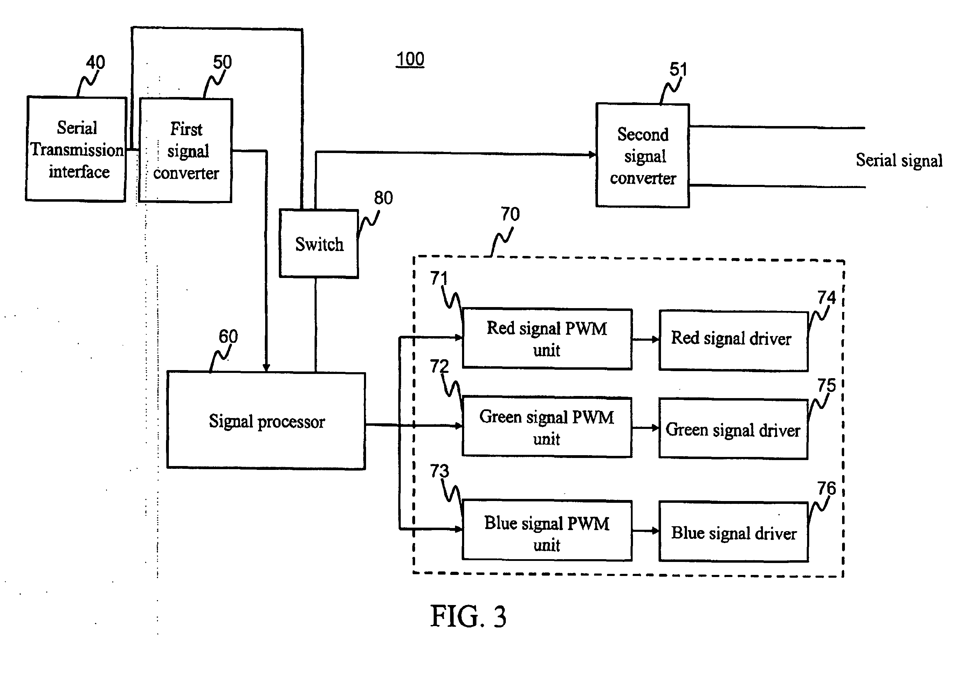

The signal processor 60 is electrically connected to the first signal converter 50, for receiving the digital signal output by the first signal converter 50, and decoding the digital signal to obtain a lighting device controlling data. The signal processor 60 determines whether to transmit the serial signal output by the serial transmission interface 40 to another lighting driving device (not shown) or not according to the digital signal. The signal processor 60 may be, for example, a DMX512 signal decoder or a micro control unit (MCU). The digital signal includes an initial signal, a blank data, and a plurality of lighting device controlling data. Once receiving the initial signal and the blank data, the signal processor 60 continues to transmit the initial signal and the blank data to another lighting driving device simultaneously; once receiving a first controlling data in the plurality of lighting device controlling data, the signal processor 60 synchronously transmits a null signal to the another lighting driving device; and once receiving the subsequent controlling data in the plurality of lighting device controlling data after the first controlling data, the signal processor 60 continues to transmit the subsequent controlling data after the first controlling data to the another lighting driving device. The lighting device controlling data after the first controlling data refers to the second controlling data and the residual lighting device controlling data. Since the lighting devices of the present invention are serially connected, the DMX512 signal may be distorted after a multistage signal converting process. Therefore, before the signal processor 60 in each stage outputs the digital signal to the second signal converter 51 (as shown in FIG. 3), a signal waveform of the output digital signal is further corrected, so as to solve the signal distortion problem resulted from signal conversion.

The lighting driving unit 70 is electrically connected to the signal processor 60, for outputting a driving signal to the lighting device according to the controlling data, so as to control an actuation (for example, ON or OFF) of the lighting device. The lighting driving unit 70 includes a pulse width modulator (PWM) and a driver, in which the driver is preferably a current driver.

The switch 80 is electrically connected to the serial transmission interface 40 and the signal processor 60, and the signal processor 60 controls an ON/OFF motion of the switch 80, so as to determine whether to transmit the serial signal output by the serial transmission interface 40 to the circuit in next stage or not. When the switch 80 is in an ON state, the serial signal is transmitted to the circuit in the next stage.

FIG. 3 is a circuit block diagram of a lighting driving device according to the present invention. As shown in FIG 3, the lighting driving device of the present invention includes a serial transmission interface 40, a first signal converter 50, a second signal converter 51, a signal processor 60, and a lighting driving unit 70.

The serial transmission interface 40 is used to receive a signal or data in a serial transmission format, for example, a differential signal. The serial transmission interface 40 may be, for example, an RS-422 interface or an RS-485 interface. The serial transmission interface 40 is preferably the RS-485 interface.

The first signal converter 50 is electrically connected to the serial transmission interface 40, for receiving a serial signal output by the serial transmission interface 40, and converting the serial signal to a digital signal. The digital signal is preferably a standard DMX512 signal. The first signal converter 50 is preferably an RS-485 to TTL signal converter. In addition, the serial transmission interface 40 of the present invention may be omitted, and instead, the serial signal is directly carried by the first signal converter 50.

The second signal converter 51 is electrically connected to the signal processor 60, for receiving the digital signal output by the signal processor 60, and converting the digital signal to the serial signal. The second signal converter 51 is preferably a TTL to RS-485 signal converter.

The signal processor 60 is electrically connected to the first signal converter 50, for receiving the digital signal output by the first signal converter 50, and decoding the digital signal to obtain a lighting device controlling data. The signal processor 60 determines whether to transmit the serial signal output by the serial transmission interface 40 to another lighting driving device (not shown) or not according to the digital signal. The signal processor 60 may be, for example, a DMX512 signal decoder.

The lighting driving unit 70 is electrically connected to the signal processor 60, for outputting a driving signal to the lighting device according to the controlling data, so as to control an actuation (for example, ON or OFF) of the lighting device. The lighting driving unit 70 includes a red signal PWM unit 71, a green signal PWM unit 72, a blue signal PWM unit 73, a red signal driver 74, a green signal driver 75, and a blue signal driver 76.

The switch 80 is electrically connected to the serial transmission interface 40 and the signal processor 60, and the signal processor 60 controls an ON/OFF motion of the switch 80, so as to determine whether to transmit the serial signal output by the serial transmission interface 40 to the second signal converter 51 or not. When the switch 80 is in an ON state, the serial signal is transmitted to the second signal converter 51.

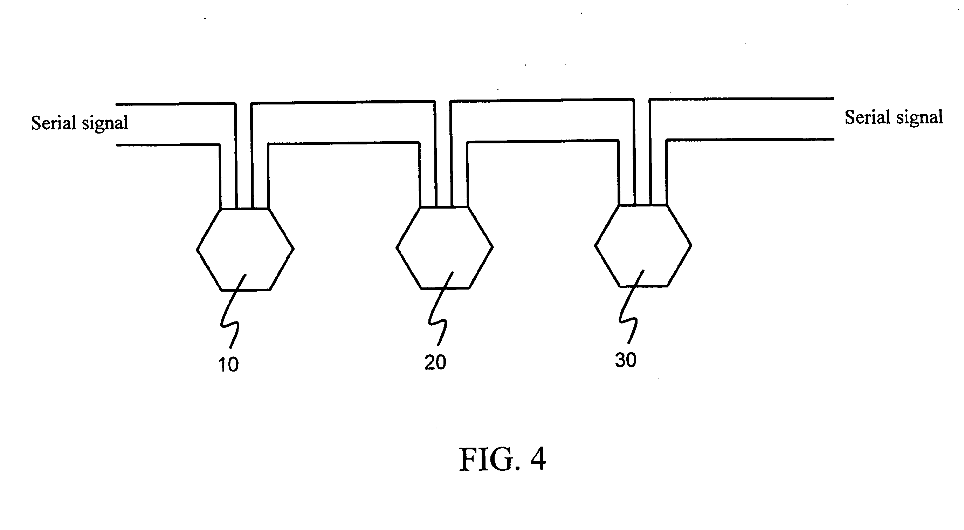

FIG. 4 is a schematic view of a connection circuit of a lighting device according to the present invention. As shown in FIG. 4, the first lighting device 10, the second lighting device 20, and the third lighting device 30 are serially connected. Each lighting device preferably includes at least one light-emitting diode (LED) lamp or other illumination lamps.

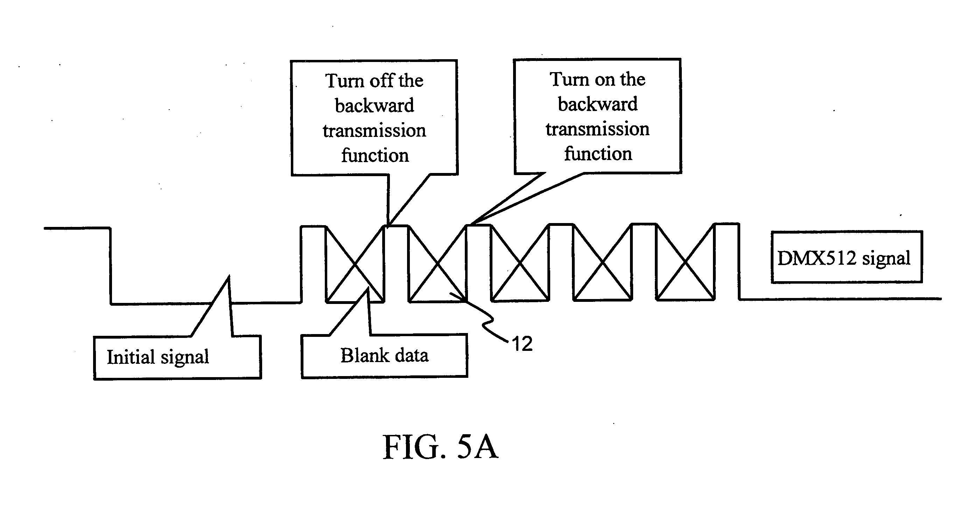

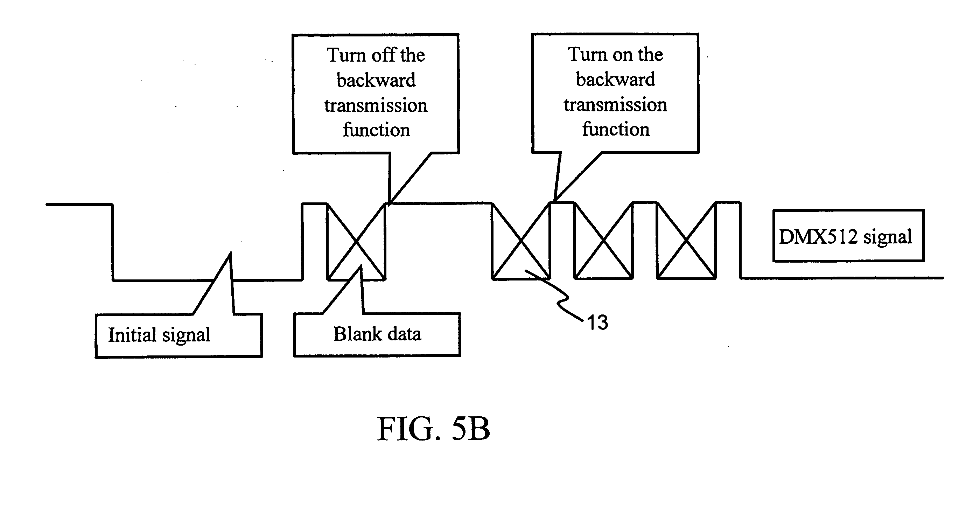

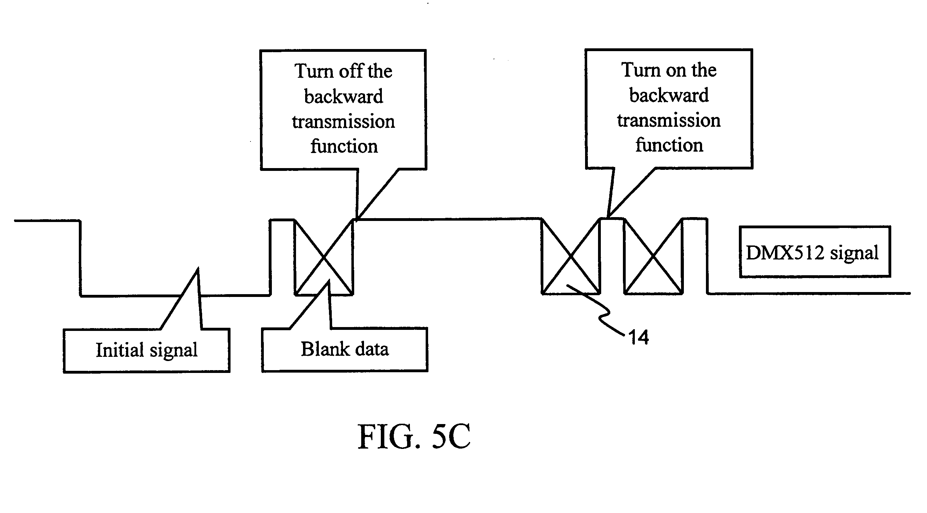

FIGs. 5A, 5B, and 5C are respectively schematic views of a DMX512 signal of each lighting device according to the present invention. As shown in FIG. 5A, once receiving the initial signal and the blank data (1byte) in the DMX512 signal, the first lighting device 10 continues to transmit the initial signal and the blank data to the second lighting device 20 simultaneously. Next, the signal processor 60 turns off a data backward transmission function, and when obtaining the first lighting device controlling data 12, the signal processor 60 synchronously transmits a null signal to the second lighting device 20, and turns on the data backward transmission function, so as to continue to transmit the residual lighting device controlling data (for example, the second lighting device controlling data 13 and the third lighting device controlling data 14) subsequent to the first lighting device controlling data to the second lighting device 20.

As shown in FIG. 5B,once receiving the initial signal and the blank data (1byte) in the DMX512 signal, the second lighting device 20 continues to transmit the initial signal and the blank data to the third lighting device 30 simultaneously. Next, the signal processor 60 turns off a data backward transmission function, and when obtaining the second lighting device controlling data 13, the signal processor 60 synchronously transmits a null signal to the third lighting device 30, and turns on the data backward transmission function, so as to continue to transmit the residual lighting device controlling data (for example, the third lighting device controlling data 14) subsequent to the first lighting device controlling data to the third lighting device 30.

As shown in FIG. 5C, once receiving the initial signal and the blank data (1byte) in the DMX512 signal, the third lighting device 30 continues to transmit the initial signal and the blank data to the next lighting device simultaneously. Next, the signal processor 60 turns off a data backward transmission function, and when obtaining the third lighting device controlling data 14, the signal processor 60 synchronously transmits a null signal to the next lighting device, and turns on the data backward transmission function, so as to continue to transmit the residual lighting device controlling data subsequent to the first lighting device controlling data to the next lighting device, and so forth.

As known from the above descriptions that, before obtaining the lighting device controlling data, each lighting device is stopped from transmitting the DMX512 signal to the next lighting device. After obtaining the lighting device controlling data, each lighting device continues to transmit the DMX512 signal to the next lighting device. In other words, each lighting device obtains their respective lighting device controlling data according to the serial connection sequence, so that the ON or OFF state of each lighting device is controlled without setting the ID address in advance.

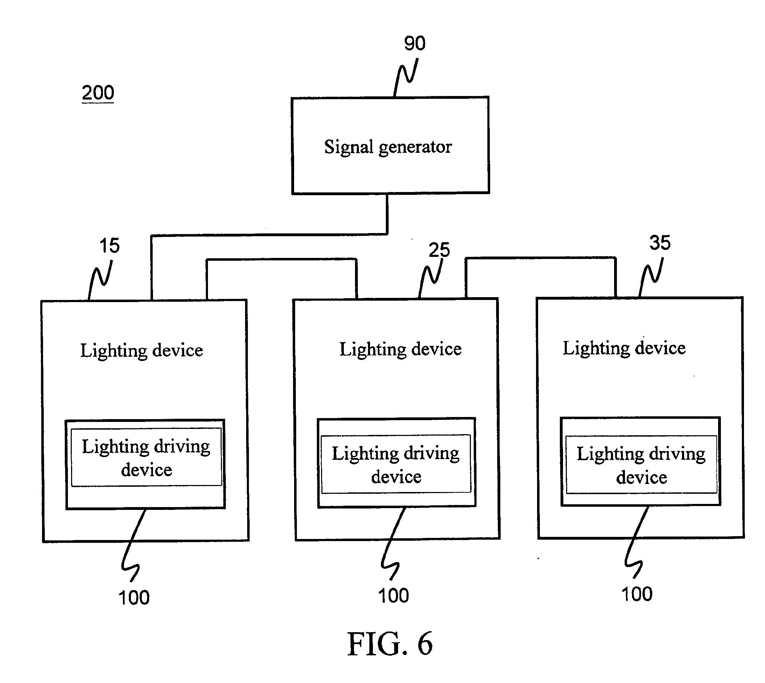

FIG. 6 is a block diagram of a lighting system according to the present invention. As shown in FIG. 6, a lighting system 200 of the present invention includes a plurality of lighting devices (for example, a lighting device 15, a lighting device 25, and a lighting device 35) and a signal generator 90. The connecting manner between the lighting device 15, the lighting device 25, and the lighting device 35 is as shown in FIG. 4. Each lighting device includes a lighting driving device 100, and the lighting driving device 100 is as shown in FIG. 3. The signal generator 90 is used to generate a serial signal including a lighting device controlling data to the lighting driving device 100 of the lighting device 15. Each lighting driving device 100 receives and decodes the serial signal, so as to obtain a lighting device controlling data corresponding to the lighting device. Each lighting driving device 100 controls the actuation (for example, ON or OFF) of the lighting device 15, the lighting device 25, and the lighting device 35 where the lighting driving device 100 is adopted according to the corresponding lighting device controlling data. After obtaining the lighting device controlling data in the serial signal, the lighting driving device 100 of the lighting device 15 transmits the serial signal to the lighting driving device 100 of the lighting device 25. After obtaining the lighting device controlling data in the serial signal, the lighting driving device 100 of the lighting device 25 transmits the serial signal to the lighting driving device 100 of the lighting device 35, and so forth.

To sum up, in the lighting driving device and the lighting system thereof according to the present invention, the lighting devices are serially connected together, and a lighting driving device is disposed on each lighting device, such that each lighting device obtains their respective lighting device controlling data according to the serial connection sequence, and thus the ON or OFF of each lighting device is controlled without setting the ID address in advance. Therefore, the lighting devices are driven without addressing, and the using convenience of the lighting system is further enhanced.

## Claims

1. A lighting driving device (100) suitable for receiving a serial signal to drive a lighting device, and transmitting the serial signal to another lighting driving device, the lighting driving device comprising:
a first signal converter (50), for carrying the serial signal, and converting the serial signal to a digital signal;
a signal processor (60) for receiving the digital signal output by the first signal converter, decoding the digital signal to obtain a lighting device controlling data, and determining whether to transmit the serial signal to another lighting driving device or not according to the digital signal; and
a lighting driving unit (70), for outputting a driving signal to the lighting device according to the lighting device controlling data, so as to control an actuation of the lighting device,
**characterised in that** the digital signal comprises an initial signal, a blank data, and a plurality of lighting device controlling data; once receiving the initial signal and the blank data, the signal processor continues to transmit the initial signal and the blank data to another lighting driving device simultaneously; once receiving a first controlling data in the lighting device controlling data, the signal processor synchronously transmits a null signal to the another lighting driving device; and once receiving subsequent controlling data in the lighting device controlling data after the first controlling data, the signal processor continues to transmit the subsequent controlling data after the first controlling data to the another lighting driving device.

2. The lighting driving device according to claim 1, further comprising:
a second signal converter (51), electrically connected to the signal processor, for receiving the digital signal output by the signal processor, wherein before outputting the digital signal to the second signal converter, the signal processor further corrects a signal waveform of the digital signal; and
a switch (51), electrically connected to the signal processor, wherein the signal processor controls an ON/OFF motion of the switch, so as to determine whether to transmit the serial signal to the second signal converter or not.

3. The lighting driving device according to claim 2, wherein the second signal converter (51) is a transistor-transistor-logic (TTL) to RS-485 signal converter.

4. The lighting driving device according to claim 1, wherein the first signal converter (50) is an RS-485 to TTL signal converter.

5. The lighting driving device according to claim 1, wherein the lighting driving unit (70) comprises a pulse width modulator (PWM) and a current driver.

6. The lighting driving device according to claim 1, wherein the digital signal is a standard DMX512 signal, and the signal processor is a DMX512 signal decoder.

7. A lighting system, comprising:
a signal generator (50), for generating a serial signal comprising a plurality of lighting device controlling data; and
a plurality of serially-connected lighting devices (15, 25, 35), wherein each lighting device comprises a lighting driving device according to anyone of claims 1 - 6, and each lighting driving device receives and decodes the serial signal to obtain a lighting device controlling data corresponding to the lighting device, and each lighting driving device controls an actuation of the lighting device where the lighting driving device is adopted according to the corresponding lighting device controlling data.

## Patentansprüche

1. Eine Beleuchtungsansteuerungsvorrichtung (100) geeignet zum Empfangen eines Seriensignals zur Ansteuerung einer Beleuchtungsvorrichtung und zum Übertragen des Seriensignals zu einer anderen Beleuchtungsansteuerungsvorrichtung, wobei die Beleuchtungsansteuerungsvorrichtung umfasst:
einen ersten Signalwandler (50) zum Aufnehmen des Seriensignals und Umwandeln des Seriensignals in ein digitales Signal;
einen Signalprozessor (60) zum Empfangen des von dem ersten Signalwandler ausgegebenen digitalen Signals, Decodieren des digitalen Signals, um einen Beleuchtungsvorrichtungssteuerungswert zu erhalten, und Bestimmen, ob entsprechend des digitalen Signals das Seriensignal zu einer anderen Beleuchtungsansteuervorrichtung übertragen wird oder nicht; und
eine Beleuchtungsansteuerungseinheit (70) zum Ausgeben eines Ansteuerungssignals an die Beleuchtungsvorrichtung entsprechend des Beleuchtungsvorrichtungssteuerungswertes, um eine Betätigung der Beleuchtungsvorrichtung zu steuern,
**dadurch gekennzeichnet, dass**
das digitale Signal ein Initialsignal, einen Leerwert und eine Vielzahl von Beleuchtungsvorrichtungssteuerungswerten umfasst, wobei sobald das Initialsignal und der Leerwert erhalten ist, der Signalprozessor damit fortfährt, das Initialsignal und den Leerwert gleichzeitig zu einer anderen Beleuchtungsansteuerungsvorrichtung zu übertragen; wobei sobald ein erster Steuerungswert in den Beleuchtungsvorrichtungssteuerungswerten empfangen wurde, der Signalprozessor synchron ein Nullsignal zu der anderen Beleuchtungsansteuerungsvorrichtung überträgt; und wobei sobald ein nachfolgender Steuerungswert in den Beleuchtungsvorrichtungssteuerungswerten nach dem ersten Steuerungswert empfangen wurde, der Signalprozessor damit fortfährt, den nachfolgenden Steuerungswert nach dem ersten Steuerungswert zu der anderen Beleuchtungsansteuerungsvornchtung zu übertragen.

2. Die Beleuchtungsansteuerungsvorrichtung nach Anspruch 1, weiter umfassend:
einen zweiten Signalwandler (51), welcher zum Empfangen des von dem Signalprozessor ausgegebenen digitalen Signals elektrisch mit dem Signalprozessor verbunden ist, wobei vor einer Ausgabe des digitalen Signals zu dem zweiten Signalwandler der Signalprozessor ferner eine Signalwellenform des digitalen Signals korrigiert; und
einen Schalter (51), welcher mit dem Signalprozessor elektrisch verbunden ist, wobei der Signalprozessor eine An/Aus-Bewegung des Schalters steuert, um zu bestimmen, ob das Seriensignal zu dem zweiten Signalwandler übertragen wird oder nicht.

3. Die Beleuchtungsansteuerungsvorrichtung nach Anspruch 2, wobei der zweite Signalwandler (51) eine Transistor-Transistor-Logik (TTL) zum RS-485 Signalwandler ist.

4. Die Beleuchtungsansteuerungsvorrichtung nach Anspruch 1, wobei der erste Signalwandler (50) ein RS-485 zum TTL Signalwandler ist.

5. Die Beleuchtungsansteuerungsvorrichtung nach Anspruch 1, wobei die Beleuchtungsansteuerungseinheit (70) einen Pulsweitenmodulator (PWM) und einen Stromförderer umfasst.

6. Die Beleuchtungsansteuerungsvorrichtung nach Anspruch 1, wobei das digitale Signal ein Standard DMX512 Signal ist, und der Signalprozessor ein DMX512 Signaldecoder ist.

7. Ein Beleuchtungssystem, umfassend:
einen Signalgenerator (90) zum Erzeugen eines Seriensignals umfassend eine Vielzahl von Beleuchtungsvorrichtungssteuerungswerten; und
eine Vielzahl von seriell verbundenen Beleuchtungsvorrichtungen (15, 25, 35), wobei jede Beleuchtungsvorrichtung eine Beleuchtungsansteuerungsvorrichtung nach einem der Ansprüche 1 - 6 umfasst, und jede Beleuchtungsansteuerungsvorrichtung das Seriensignal empfängt und decodiert, um einen Beleuchtungsvorrichtungssteuerungswert entsprechend der Beleuchtungsvorrichtung zu erhalten, und jede Beleuchtungsansteuerungsvorrichtung eine Betätigung der Beleuchtungsvorrichtung, wo die Beleuchtungsansteuerungsvorrichtung entsprechend der korrespondierenden Beleuchtungsvorrichtungssteuerungswerte angepasst ist, steuert.

## Revendications

1. Dispositif de commande d'éclairage (100) approprié pour recevoir un signal série afin de commander un dispositif d'éclairage, et transmettre le signal série à un autre dispositif de commande d'éclairage, le dispositif de commande d'éclairage comprenant :
un premier convertisseur de signal (50) destiné à porter le signal série, et à convertir le signal série en un signal numérique ;
un processeur de signal (60) destiné à recevoir le signal numérique délivré en sortie par le premier convertisseur de signal, à décoder le signal numérique pour obtenir des données de commande de dispositif d'éclairage, et à déterminer s'il convient de transmettre ou pas le signal série à un autre dispositif de commande d'éclairage selon le signal numérique ; et
une unité de commande d'éclairage (70) destinée à délivrer en sortie un signal de commande au dispositif d'éclairage selon les données de commande de dispositif d'éclairage, afin de commander une mise en service du dispositif d'éclairage ;
**caractérisé en ce que** le signal numérique comprend un signal de début, des données vierges, et une pluralité de données de commande de dispositif d'éclairage ; après avoir reçu le signal de début et les données vierges, le processeur de signal continue de transmettre le signal de début et les données vierges à un autre dispositif de commande d'éclairage de manière simultanée ; après avoir reçu des premières données de commande dans les données de commande de dispositif d'éclairage, le processeur de signal transmet de manière synchrone un signal d'extinction à l'autre dispositif de commande d'éclairage ; et après avoir reçu d'autres données de commande dans les données de commande de dispositif d'éclairage après les premières données de commande, le processeur de signal continue de transmettre les autres données de commande après les premières données de commande à l'autre dispositif de commande d'éclairage.

2. Dispositif de commande d'éclairage selon la revendication 1, comprenant en outre :
un second convertisseur de signal (51) connecté électriquement au processeur de signal, destiné à recevoir le signal numérique délivré en sortie par le processeur de signal, dans lequel, avant de délivrer en sortie le signal numérique au second convertisseur de signal, le processeur de signal corrige en outre une forme d'onde de signal du signal numérique ; et
un commutateur (51) connecté électriquement au processeur de signal, lequel processeur de signal commande un mouvement MARCHE/ARRÊT du commutateur, afin de déterminer s'il convient de transmettre ou pas le signal série au second convertisseur de signal.

3. Dispositif de commande d'éclairage selon la revendication 2, dans lequel le second convertisseur de signal (51) est un convertisseur de signal logique transistor-transistor (TTL) vers RS-485.

4. Dispositif de commande d'éclairage selon la revendication 1, dans lequel le premier convertisseur de signal (50) est un convertisseur de signal RS-485 vers TTL.

5. Dispositif de commande d'éclairage selon la revendication 1, dans lequel l'unité de commande d'éclairage (70) comprend un modulateur de largeur d'impulsion (PWM) et un dispositif de commande de courant.

6. Dispositif de commande d'éclairage selon la revendication 1, dans lequel le signal numérique est un signal qui répond à la norme DMX512, et le processeur de signal est un décodeur de signal qui répond à la norme DMX512.

7. Système d'éclairage comprenant :
un générateur de signal (90) destiné à générer un signal série qui comprend une pluralité de données de commande de dispositif d'éclairage ; et
une pluralité de dispositifs d'éclairage connectés en série (15, 25, 35), dans lequel chaque dispositif d'éclairage comprend un dispositif de commande d'éclairage selon l'une quelconque des revendications 1 à 6, et dans lequel chaque dispositif de commande d'éclairage reçoit et décode le signal série afin d'obtenir des données de commande de dispositif d'éclairage qui correspondent au dispositif d'éclairage, et dans lequel chaque dispositif de commande d'éclairage commande une mise en service du dispositif d'éclairage où le dispositif de commande d'éclairage est adopté selon les données de commande de dispositif d'éclairage correspondantes.
